# EUROPÄISCHE PATENTANMELDUNG

(11) **EP 3 410 151 A1**
(43) Veröffentlichungstag der Anmeldung: **05.12.2018**
(21) Anmeldenummer: 18168652.8
(22) Anmeldetag: 23.04.2018
(51) Int. Cl.: G01S 13/74

(54) **VERFAHREN UND VORRICHTUNG ZUR LOKALISIERUNG EINES OBJEKTS**

(30) Priorität: 01.06.2017 DE 102017209318
(71) Anmelder: Robert Bosch GmbH, 70442 Stuttgart (DE)
(72) Erfinder: Pirk, Tjalf, 70619 Stuttgart (DE); Purkl, Fabian, 71277 Rutesheim (DE)

(57) **Zusammenfassung**

Die Erfindung betrifft ein Verfahren zur Lokalisierung eines Objekts (2) unter Verwendung einer beweglichen Sendeempfängereinrichtung (11), wobei das Objekt (2) einen passiven Transponder (21) aufweist, mit den Schritten: Bewegen (S1) der Sendeempfängereinrichtung (11) in eine Vielzahl von Messpositionen, bei welchen sich eine Ortsposition und/oder eine räumliche Ausrichtung der Sendeempfängereinrichtung (11) unterscheiden, wobei in jeder Messposition die Sendeempfängereinrichtung (11) ein Messsignal aussendet, der Transponder (21) des Objekts (2) ein Antwortsignal aussendet, falls der Transponder (21) das Messsignal empfängt, die Sendeempfängereinrichtung (11) das Antwortsignal empfängt oder das Ausbleiben eines Antwortsignals registriert, und die Sendeempfängereinrichtung (11) eine Messpositionsinformation bezüglich einer der Messposition entsprechenden Ortsposition der Sendeempfängereinrichtung (11) und/oder räumlichen Ausrichtung der Sendeempfängereinrichtung (11) ermittelt; und Lokalisieren (S2) des Objekts (2) unter Berücksichtigung der empfangenen oder als ausbleibend registrierten Antwortsignale und der entsprechenden Messpositionsinformationen.

## Beschreibung

Die vorliegende Erfindung betrifft ein Verfahren zur Lokalisierung eines Objekts unter Verwendung einer beweglichen Sendeempfängereinrichtung, und eine Vorrichtung zur Lokalisierung eines Objekts.

### Stand der Technik

Zur Lokalisierung von Fahrzeugen oder Objekten im Außenbereich haben sich GPS-Empfänger etabliert. Auch in geschlossenen Gebäuden besteht jedoch oftmals ein Bedarf an Möglichkeiten zur Lokalisierung und zur Auffindung von Objekten, seien es persönliche Gegenstände im Heimbereich oder Werkzeuge, Materialien und Geräte im industriellen Umfeld. Eine Positionsbestimmung mittels GPS wird in Gebäuden aufgrund der Abschattung jedoch stark erschwert.

Eine Möglichkeit, Objekte in Gebäuden zu lokalisieren, besteht darin, mehrere Sensoren an festen Positionen des Gebäudes zu verteilen, welche die mit entsprechenden Transpondern ausgestatteten Objekte detektieren können. Durch Auswertung der Sensorsignale des Sensornetzwerks kann die Position des Objekts bestimmt werden. Beispielsweise ist eine derartige Lokalisierung von Saugrobotern aus der Druckschrift EP 2 918 212 A1 bekannt.

### Offenbarung der Erfindung

Die Erfindung betrifft ein Verfahren zur Lokalisierung eines Objekts unter Verwendung einer beweglichen Sendeempfängereinrichtung mit den Merkmalen des Patentanspruchs 1 und eine Vorrichtung zur Lokalisierung eines Objekts mit den Merkmalen des Patentanspruchs 6.

Gemäß einem ersten Aspekt betrifft die Erfindung demnach ein Verfahren zur Lokalisierung eines Objekts unter Verwendung einer beweglichen Sendeempfängereinrichtung. Das Objekt weist hierbei einen passiven Transponder auf. Die Sendeempfängereinrichtung wird in eine Vielzahl von Messpositionen bewegt, bei welchen sich eine Ortsposition und/oder eine räumliche Ausrichtung der Sendeempfängereinrichtung unterscheiden. In jeder Messposition sendet die Sendeempfängereinrichtung ein Messsignal aus und der Transponder sendet ein Antwortsignal aus, falls der Transponder das Messsignal empfängt. Die Sendeempfängereinrichtung empfängt das Antwortsignal oder registriert das Ausbleiben eines Antwortsignals. Weiter ermittelt die Sendeempfängereinrichtung eine Messpositionsinformation bezüglich einer der Messposition entsprechenden Ortsposition der Sendeempfängereinrichtung und/oder bezüglich einer räumlichen Ausrichtung der Sendeempfängereinrichtung. Das Objekt wird unter Berücksichtigung der empfangenen oder als ausbleibend registrierten Antwortsignale und der entsprechenden Messpositionsinformationen lokalisiert.

Gemäß einem zweiten Aspekt betrifft die Erfindung demnach eine Vorrichtung zur Lokalisierung eines Objekts, wobei das Objekt einen passiven Transponder aufweist. Die Vorrichtung umfasst eine Sendeempfängereinrichtung, welches zu einer Vielzahl von Messpositionen bewegbar ist und dazu ausgebildet ist, an jeder Messposition ein Messsignal auszusenden. Weiter ist die Sendeempfängereinrichtung dazu ausgebildet, ein von dem Objekt ausgesendetes Antwortsignal zu empfangen, welches der Transponder des Objekts aussendet, falls dieser das Messsignal empfängt, oder das Ausbleiben eines Antwortsignals zu registrieren. Die Vorrichtung umfasst weiter eine Auswerteeinrichtung, welche dazu ausgebildet ist, eine Messpositionsinformation bezüglich einer der Messposition entsprechenden Ortsposition der Sendeempfängereinrichtung und/oder räumlichen Ausrichtung der Sendeempfängereinrichtung zu ermitteln. Die Auswerteeinrichtung ist weiter dazu ausgelegt, das Objekt unter Berücksichtigung der empfangenen oder als ausbleibend registrierten Antwortsignale und der entsprechenden Messpositionsinformationen zu lokalisieren.

Bevorzugte Ausführungsformen sind Gegenstand der jeweiligen Unteransprüche.

### Vorteile der Erfindung

Das erfindungsgemäße Verfahren und die erfindungsgemäße Vorrichtung ermöglichen das Auffinden und eine präzise Lokalisierung eines Objekts, worunter beispielsweise die Bestimmung der genauen Ortsposition zu verstehen ist, oder auch die Bestimmung eines Raumbereichs, in welchem sich das Objekt befindet. Erfindungsgemäß ist lediglich eine einzelne Sendeempfängereinrichtung erforderlich, um das Objekt zu lokalisieren. Die Sendeempfängereinrichtung kann vorteilhafterweise in bereits vorhandene bewegliche Geräte integriert werden, beispielsweise in einen Saugroboter, einen beweglichen Industrieroboter oder sonstige bewegliche Elemente, wie etwa Förderbänder. Somit können die Kosten deutlich reduziert werden, da insbesondere die Kosten für die Installation und Instandhaltung eines Sensornetzwerkes entfallen. Weiter ist das Verfahren flexibel einsetzbar, da kein zusätzlicher Installationsaufwand nötig ist, um beliebige Räume nach dem Objekt zu durchsuchen. Schließlich ist es möglich, die Ortungsgenauigkeit, mit welcher das Objekt lokalisiert wird, dynamisch anzupassen, indem beispielsweise die Sendeempfängereinrichtung in vorgegebenen Raumbereichen oder in Raumbereichen, in welchen das Objekt bereits lokalisiert wurde, gezielt nach dem Objekt sucht. So kann beispielsweise die Sendeempfängereinrichtung auf die entsprechenden Raumbereiche ausgerichtet werden.

Gemäß einer bevorzugten Weiterbildung des Verfahrens wird zum Lokalisieren des Objekts für jede Messposition ein Abstand des Objekts von der Sendeempfängereinrichtung anhand einer Signalstärke des empfangenen Antwortsignals bestimmt. Sendet das Objekt stets mit einer konstanten Signalstärke das Antwortsignal aus, so kann anhand der Schwächung der Signalstärke während der Laufzeit zur Sendeempfängereinrichtung auf den Abstand des Objekts geschlossen werden. Wird sogar ein Ausbleiben des Antwortsignals registriert, so kann die Sendeempfängereinrichtung erkennen, dass sich das Objekt außerhalb der Reichweite befindet. Dadurch können bestimmte Raumbereiche ausgeschlossen werden.

Gemäß einer Weiterbildung des Verfahrens sendet die Sendeempfängereinrichtung das Messsignal in einen kegelförmigen Raumbereich aus und das Objekt wird in dem kegelförmigen Raumbereich lokalisiert, falls die Sendeempfängereinrichtung ein Antwortsignal empfängt. Durch Änderung der räumlichen Ausrichtung, beispielsweise durch Drehen der Sendeempfängereinrichtung um eine Achse senkrecht zum Untergrund kann die Sendeempfängereinrichtung nach einem Leuchtturmprinzip das Objekt lokalisieren. Die Aussenderichtung kann gemäß weiteren Ausführungsformen nicht nur um eine Achse geschwenkt werden sondern kann auch beliebig im Raum ausgerichtet werden.

Gemäß einer bevorzugten Weiterbildung des Verfahrens wird eine Sendeleistung des Messsignals variiert und es wird eine minimale Sendeleistung ermittelt, welche ausreicht, um ein Antwortsignal zu empfangen. Zum Lokalisieren des Objekts wird ein Abstand des Objekts von der Sendeempfängereinrichtung unter Berücksichtigung der ermittelten minimalen Sendeleistung berechnet. Beispielsweise kann die Sendeleistung kontinuierlich oder schrittweise solange erhöht werden, bis die Sendeempfängereinrichtung ein Antwortsignal empfängt. Gemäß einer Ausführungsform kann unter Verwendung einer vorgegebenen Tabelle ein der ermittelten minimalen Sendeleistung entsprechender Abstand des Objekts ausgelesen werden.

Gemäß einer bevorzugten Weiterbildung des Verfahrens wird das Lokalisieren des Objekts durch Trilateration und/oder Triangulierung durchgeführt. Wird beispielsweise für jede der Messpositionen ein entsprechender Abstand des Objekts von der Messposition berechnet, so kann durch Auffinden des Schnittpunkts der Kreise um die Messpositionen mit den entsprechenden Abständen als Radius die genaue Ortsposition des Objekts bestimmt werden. Ausreichend ist hierzu, dass eine einzige Sendeempfängereinrichtung an die Vielzahl von Messpositionen bewegt wird.

Gemäß einer bevorzugten Weiterbildung der Vorrichtung ist die Auswerteeinrichtung dazu ausgebildet, für jede Messposition einen Abstand des Objekts von der Sendeempfängereinrichtung anhand einer Signalstärke des empfangenen Antwortsignals zu bestimmen.

Gemäß einer Weiterbildung der Vorrichtung ist die Sendeempfängereinrichtung dazu ausgebildet, das Messsignal in einen kegelförmigen Raumbereich auszusenden und die Auswerteeinrichtung ist dazu ausgebildet, das Objekt in dem kegelförmigen Raumbereich zu lokalisieren, falls die Sendeempfängereinrichtung ein Antwortsignal empfängt.

Gemäß einer bevorzugten Weiterbildung der Vorrichtung ist die Sendeempfängereinrichtung dazu ausgebildet, eine Sendeleistung des Messsignals zu variieren, wobei die Auswerteeinrichtung dazu ausgebildet ist, eine minimale Sendeleistung zu ermitteln, welche ausreicht, um ein Antwortsignal zu empfangen. Die Auswerteeinrichtung ist dazu ausgelegt, zum Lokalisieren des Objekts einen Abstand des Objekts von der Sendeempfängereinrichtung unter Berücksichtigung der ermittelten minimalen Sendeleistung zu berechnen.

Gemäß einer bevorzugten Weiterbildung der Vorrichtung ist die Auswerteeinrichtung dazu ausgebildet, das Lokalisieren des Objekts durch Trilateration und/oder Triangulierung durchzuführen.

### Kurze Beschreibung der Zeichnungen

Es zeigen:
Figur 1 ein schematisches Blockschaltbild einer Vorrichtung zum Lokalisieren eines Objekts gemäß einer Ausführungsform der Erfindung;
Figur 2 eine schematische Draufsicht auf ein beispielhaftes Szenario zur Erläuterung der Lokalisierung eines Objekts mittels Abstandsbestimmung;
Figur 3 eine Illustration eine Szenarios zur Erläuterung der Lokalisierung eines Objekts mittels räumlich lokalisiert ausgesendeter Messsignale; und
Figur 4 ein Flussdiagramm zur Erläuterung eines Verfahrens zur Lokalisierung eines Objekts gemäß einer Ausführungsform der Erfindung.

In allen Figuren sind gleiche bzw. funktionsgleiche Elemente und Vorrichtungen mit denselben Bezugszeichen versehen. Verschiedene Ausführungsformen können beliebig miteinander kombiniert werden, sofern dies sinnvoll ist.

### Beschreibung der Ausführungsbeispiele

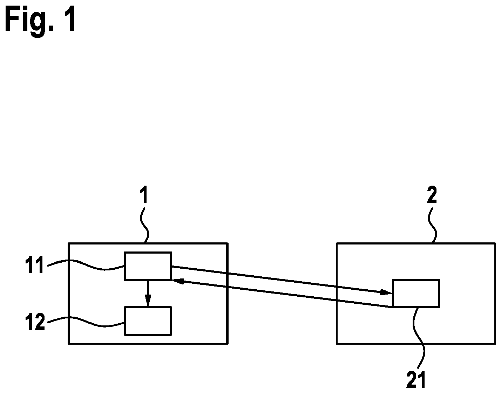

Figur 1 zeigt ein Blockdiagramm einer Vorrichtung 1 zur Lokalisierung eines Objekts 2, beispielsweise eines Werkzeugs, Messgeräts oder zu verarbeitenden Materials oder eines persönlichen Gegenstandes, wie eines Schlüssels, eines Kleidungsstücks, einer Fernbedienung oder eines Spielzeugs. Das Objekt 2 weist einen passiven Transponder 21 auf, etwa einen passiven RFID-Tag.

Die Vorrichtung 1 umfasst eine Sendeempfängereinrichtung 11, welche im Raum zu einer Vielzahl von Messpositionen bewegbar ist. Die Sendeempfängereinrichtung 11 kann in eine bewegliche Einrichtung integriert sein, beispielsweise in einen Saugroboter, ein Förderband oder Fließband oder in ein Fahrzeug, etwa einen Gabelstapler, eine Drohne oder einen Quadrocopter. Die bewegliche Einrichtung kann ebenfalls Teil der Vorrichtung 1 sein. Die bewegliche Einrichtung kann dazu ausgelegt sein, sich autonom entlang eines vorgegebenen, berechneten oder chaotisch erzeugten Pfades durch einen oder mehrere Räume zu bewegen. Die Sendeempfängereinrichtung 11 wird dadurch zu einer Vielzahl von Messpositionen bewegt, worunter Raumpositionen zu verstehen sind, an welcher die Sendeempfängereinrichtung eine nachfolgend beschriebene Messung durchführt.

Demnach sendet die Sendeempfängereinrichtung 11 an jeder Messposition ein Messsignal aus, beispielsweise ein Funksignal auf Basis des RFID oder Bluetooth-Standards. Falls der Transponder 21 des Objekts das Messsignal empfängt, sendet dieser ein Antwortsignal aus, welches wiederum von der Sendeempfängereinrichtung 11 der Vorrichtung 1 empfangen wird. Das Antwortsignal kann insbesondere auch Informationen enthalten, welche das Objekt 2 eindeutig identifizieren, etwa eine eindeutige Seriennummer, oder auch weitere Informationen zur Umgebung, etwa zur Lichtstärke oder zur Temperatur.

Das Messsignal kann mit einer vorgegebenen festen Signalstärke ausgesendet werden. Falls die Sendeempfängereinrichtung 11 kein Antwortsignal empfängt, registriert sie das Ausbleiben des Antwortsignals, woraus geschlossen werden kann, dass sich das Objekt 2 außerhalb der Reichweite der Sendeempfängereinrichtung 11 befindet.

Das Messsignal kann jedoch auch eine zeitlich variierende Signalstärke aufweisen. So kann die Sendeempfängereinrichtung 11 die Signalstärke kontinuierlich oder schrittweise solange erhöhen, bis die Sendeempfängereinrichtung 11 ein Antwortsignal empfängt. Umgekehrt kann die Sendeempfängereinrichtung 11 die Signalstärke solange verringern, bis sie ein Ausbleiben des Antwortsignals registriert.

Die Vorrichtung 1 umfasst weiter eine Auswerteeinrichtung 12. Die Auswerteeinrichtung 12 ist dazu ausgebildet, eine Positionsinformation zu ermitteln, welche eine Ortsposition der Sendeempfängereinrichtung 11 und/oder eine räumliche Ausrichtung der Sendeempfängereinrichtung 11 umfassen kann. Unter einer Ortsposition können die genauen räumlichen zweidimensionalen oder dreidimensionalen Koordinaten der Sendeempfängereinrichtung 11 oder auch relative Koordinaten der Sendeempfängereinrichtung 11 an der Messposition verstanden werden, beispielsweise die Angabe des Stockwerks, des Raums und gegebenenfalls des Raumbereichs, in welchem sich die Sendeempfängereinrichtung 11 befindet. Unter der Ausrichtung der Sendeempfängereinrichtung kann beispielsweise eine Winkellage relativ zu einer Drehachse verstanden werden, um welche die Sendeempfängereinrichtung drehbar ist. Die Ermittlung der Positionsinformationen kann durch Trilateration oder Triangulierung mittels ortsfest installierter Sendeempfängereinrichtungen bzw. Beacons durchgeführt werden. Weiter ist die Verwendung von Koppelnavigation bzw. Dead Reckoning möglich, wobei beispielsweise die Umdrehung der Räder der beweglichen Einrichtung gemessen werden kann. Die bewegliche Einrichtung kann einen oder mehrere Inertialsensoren aufweisen, welche die kontinuierliche Erfassung der Raumposition der beweglichen Einrichtung ermöglichen. Gemäß weiteren Ausführungsformen weist die bewegliche Einrichtung weitere Sensoren auf, beispielsweise Lichtsensoren, Farbsensoren, Kameras, Lidarsensoren oder Ultraschallsensoren, wobei die Positionsbestimmung durch Auswertung der Sensordaten erfolgt. Gemäß einer weiteren Ausführungsform wird die Positionsbestimmung mittels SLAM-Algorithmen (simultaneous localization and mapping) durchgeführt.

Die Auswerteeinrichtung 12 ist weiter dazu ausgelegt, das Objekt 2 unter Berücksichtigung der empfangenen oder als ausbleibend registrierten Antwortsignale und der entsprechenden Messpositionsinformationen zu lokalisieren. Die Auswerteeinrichtung 12 kann insbesondere auch eine Signalstärke des empfangenen Antwortsignals oder eine minimale Signalstärke, welche benötigt wird, um gerade noch ein Antwortsignal zu empfangen, berücksichtigen.

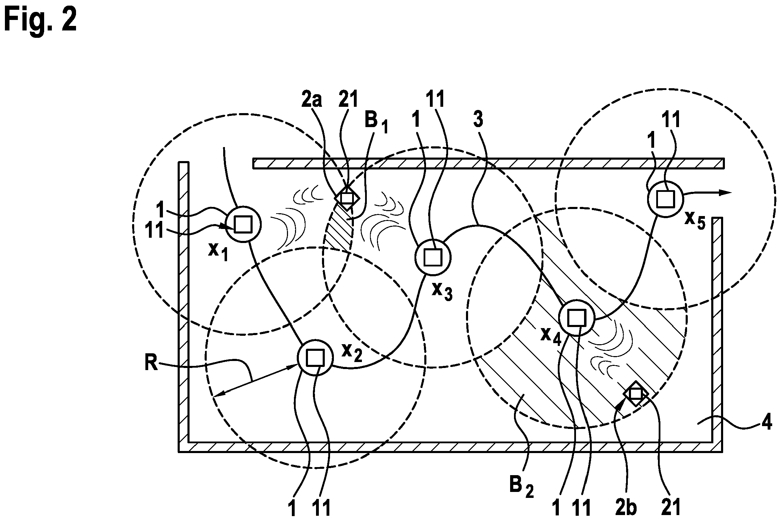

Eine mögliche Lokalisierung soll im Folgenden anhand des in Figur 2 illustrierten beispielhaften Szenarios näher erläutert werden. Die Vorrichtung 1 bewegt sich entlang eines Pfades 3 durch einen Raum 4 in einem Gebäude. Zu verschiedenen Messzeitpunkten sendet die Sendeempfängereinrichtung 11 der Vorrichtung 1 an entsprechenden Messpositionen x1 bis x4 jeweils ein Messsignal aus und empfängt ein von einem Transponder 21 der zu lokalisierenden Objekte 2a, 2b ausgesendetes Antwortsignal oder registriert ein Ausbleiben eines entsprechenden Antwortsignals. Das Objekt 2a, 2b kann anhand des Antwortsignals eindeutig von der Auswerteeinrichtung 12 identifiziert werden.

In dem in Figur 2 dargestellten Szenario empfängt die Sendeempfängereinrichtung 11 an einer ersten Messposition x1 und an einer dritten Messposition x3 ein Antwortsignal von einem ersten Objekt 2a und an einer vierten Messposition x4 ein Antwortsignal von einem zweiten Objekt 2b. An der zweiten und fünften Messposition x2 und x5 registriert die Sendeempfängereinrichtung 11 jeweils das Ausbleiben von Antwortsignalen. Aufgrund einer Kenntnis der Reichweite R, d. h. desjenigen Abstands von der Sendeempfängereinrichtung 11, in welcher ein Transponder 21 eines Objekts 2 das Messsignal empfangen kann, kann die Auswerteeinrichtung 12 die möglichen Raumpositionen der Objekte 2a, 2b einschränken. Demnach lokalisiert die Auswerteeinrichtung 12 das erste Objekt 2a in einem ersten Raumbereich B1, welcher der Schnittmenge von jeweiligen kreisscheibenförmigen Bereichen um die von der Sendeempfängereinrichtung 11 ermittelte erste Messposition x1 bzw. dritte Messposition x3 entspricht, abzüglich eines kreisscheibenförmigen Bereichs um die zweite Messposition x2, wobei ein Radius R der kreisscheibenförmigen Bereiche jeweils der Reichweite die Sendeempfängereinrichtung 11 entspricht. Analog wird das zweite Objekt 2b in einem zweiten Bereich B2 lokalisiert, welcher einem entsprechenden kreisscheibenförmigen Bereich um die vierte Messposition x4 entspricht, abzüglich entsprechender kreisscheibenförmiger Bereiche um die dritte und fünfte Messposition x3 und x5.

Alternativ kann eine Lokalisierung der Objekte auch unter Kenntnis einer Reichweite der ausgesendeten Antwortsignale von der Auswerteeinrichtung 12 ermittelt werden. In diesem Fall verlaufen die entsprechenden kreisscheibenförmigen Bereiche um die Objekte 2a, 2b.

Weiter kann die Auswerteeinrichtung 12 dazu ausgebildet sein, eine genaue Ortskoordinate des Objekts 2 durch Trilateration zu bestimmen. Dazu werden für jede Messposition die jeweiligen Abstände des Objekts 2 von der Sendeempfängereinrichtung 11 bestimmt. Durch Ermitteln des Schnittpunkts der entsprechenden Kreislinien um die Messpositionen herum bestimmt die Auswerteeinrichtung 12 die genauen Ortskoordinaten des Objekts 2.

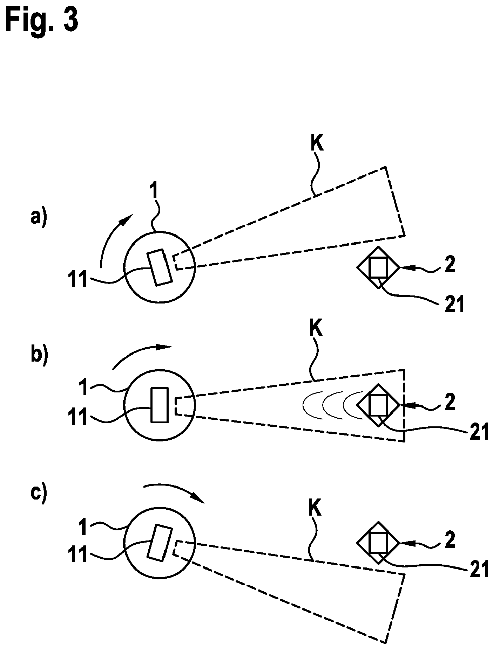

In Figur 3 ist ein weiteres Szenario zur Lokalisierung eines Objekts 2 illustriert. Demnach ist die Vorrichtung 1, beispielsweise ein Saugroboter, um eine Achse herum drehbar. Das von der Sendeempfängereinrichtung 11 ausgebildete Messsignal wird lediglich in einen räumlich begrenzten Raumbereich, insbesondere einen kegelförmigen Bereich K ausgesendet. Für eine feste Messposition oder auch in Bewegung kann die Vorrichtung 1 oder eine oben beschriebene bewegliche Einrichtung der Vorrichtung 1, welche die Sendeempfängereinrichtung 11 aufweist, um die Achse herumgedreht werden. Dadurch überstreicht der kegelförmigen Raumbereich K ein bestimmtes Gebiet und erlaubt es dadurch, mittels eines leuchtturmartigen Verfahrens das Objekt 2 zu lokalisieren.

In Figur 3 befindet sich das Objekt 2 zuerst außerhalb des kegelförmigen Raumbereich K (Figur 3a), danach überstreicht der kegelförmige Raumbereich K das Objekt 2 (Figur 3b) und schließlich liegt das Objekt 2 wieder außerhalb des kegelförmigen Raumbereichs K (Figur 3c). Die Auswerteeinrichtung 12 ermittelt die genaue Winkellage der Vorrichtung 1 oder beweglichen Einrichtung, bei welcher die Sendeempfängereinrichtung 11 ein Antwortsignal empfängt und kann unter weiterer Kenntnis der Ortsposition der Sendeempfängereinrichtung 11 den kegelförmigen Bereich K ermitteln, in welchem sich das Objekt 3 befindet.

Gemäß weiteren Ausführungsformen kann die in Figur 3 illustrierte Bestimmung des kegelförmigen Raumbereichs mit der in Figur 2 erläuterten Abstandsmessung kombiniert werden. Insbesondere ist eine Kombination einer istrop abstrahlenden Sendeempfängereinrichtung 11 zur Groblokalisierung und einer gerichteten Sendeempfängereinrichtung 11 zur Feinlokalisierung vorteilhaft.

Die Sendeempfängereinrichtung 11 und die Auswerteeinrichtung 12 können vorzugsweise beide in die oben beschriebene bewegliche Einrichtung integriert sein. Alternativ kann auch die Lokalisierung des Objekts 2 extern durchgeführt werden, d. h. die zur Lokalisierung benötigten Informationen werden über eine vorzugsweise drahtlose Verbindung an einen externen Server übermittelt und die Lokalisierung wird dort durchgeführt. Insbesondere können dort die Informationen von einer Vielzahl von erfindungsgemäßen Vorrichtungen 1 ausgewertet werden, um die Genauigkeit zu verbessern.

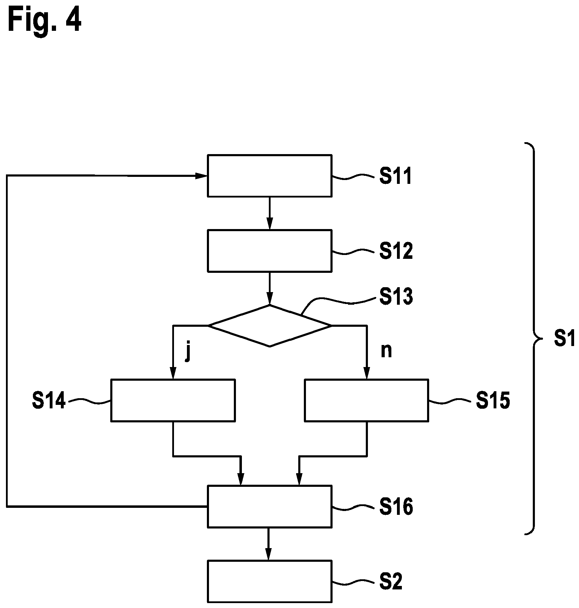

In Figur 4 ist ein beispielhaftes Verfahren zur Lokalisierung eines Objekts 2 illustriert. Das Verfahren gliedert sich in einen ersten Schritt S1, in welcher eine Sendeempfängereinrichtung 11 an einen eine Vielzahl von Positionen bewegt wird und entsprechende Messungen durchgeführt werden, und in einen zweiten Schritt S2, in welchem das Objekt 2 lokalisiert wird.

Der erste Schritt S1 umfasst einen Unterschritt S11, bei welchem die Sendeempfängereinrichtung 11 in eine bestimmte Messposition bewegt wird. In einem weiteren Verfahrensschritt S12 wird ein Messsignal durch die Sendeempfängereinrichtung 11 ausgesendet. In einem Verfahrensschritt S13 wird überprüft, ob die Sendeempfängereinrichtung 11 ein Antwortsignal empfängt, welches ein Transponder 21 des Objekts 2 aussendet, falls der Transponder 21 das Messsignal empfängt. Ist dies der Fall, so wird in einem Verfahrensschritt S14 das Antwortsignal registriert und vorzugsweise zusätzlich eine Signalstärke des Antwortsignals und Informationen bezüglich einer Identifikation des Objekts 2 abgespeichert. Falls die Sendeempfängereinrichtung 11 kein Antwortsignal empfängt, wird das Ausbleiben des Antwortsignals registriert (S15). In einem weiteren Schritt S16 wird weiter eine Messpositionsinformation bezüglich einer der Messposition entsprechenden Ortsposition der Sendeempfängereinrichtung 11 und/oder einer räumlichen Ausrichtung der Sendeempfängereinrichtung 11 ermittelt. Wie oben beschrieben, kann dies eine absolute oder relative Lage der Sendeempfängereinrichtung 11 oder eine Winkellage der Sendeempfängereinrichtung 11 umfassen. Der erste Schritt S1 wird für eine Vielzahl von Messpositionen, d. h. für mindestens zwei Messpositionen wiederholt.

Schließlich wird in einem Verfahrensschritt S2 das Objekt 2 unter Berücksichtigung der empfangenen oder als ausbleibend registrierten Antwortsignale und der entsprechenden Messpositionsinformationen lokalisiert. Die Lokalisierung kann wie oben beschrieben durchgeführt werden.

Das erfindungsgemäße Verfahren zum Lokalisieren eines Objekts 2 kann gemäß einer Ausführungsform in regelmäßigen Abständen oder zu fest vorgegebenen Zeitpunkten durchgeführt werden. Insbesondere kann eine Vielzahl von Objekten 2 gleichzeitig lokalisiert werden. Das Verfahren kann jedoch auch durch einen Benutzer manuell initialisiert werden, etwa falls ein bestimmtes Objekt 2 konkret gesucht wird, sich jedoch nicht in der zuletzt erstellten Karte mit lokalisierten Objekten befindet.

Gemäß weiteren Ausführungsformen kann für jedes Objekt 2 ein bevorzugter Suchort oder eine Vielzahl von bevorzugten Suchorten vorgegeben werden, beispielsweise eine Position oder ein Raumbereich, an oder in welchem das Objekt 2 zuletzt lokalisiert wurde. Auch fest vorgegebene, typische Suchorte können vorgegeben werden, beispielsweise ein Schlüsselbrett, ein Sofa oder eine Wäschetruhe zum Auffinden eines Schlüssels. Diese Suchorte können dem Nutzer als erster Vorschlag unterbreitet werden oder die Sendeempfängereinrichtung kann gezielt und priorisiert zu diesen Suchorten bzw. in die Nähe dieser Suchorte bewegt werden. Die Messpositionen umfassen somit einen oder mehrere der Suchorte.

## Patentansprüche

1. Verfahren zur Lokalisierung eines Objekts (2) unter Verwendung einer beweglichen Sendeempfängereinrichtung (11), wobei das Objekt (2) einen passiven Transponder (21) aufweist, mit den Schritten:
Bewegen (S1) der Sendeempfängereinrichtung (11) in eine Vielzahl von Messpositionen, bei welchen sich eine Ortsposition und/oder eine räumliche Ausrichtung der Sendeempfängereinrichtung (11) unterscheiden, wobei in jeder Messposition
- die Sendeempfängereinrichtung (11) ein Messsignal aussendet,
- der Transponder (21) des Objekts (2) ein Antwortsignal aussendet, falls der Transponder (21) das Messsignal empfängt,
- die Sendeempfängereinrichtung (11) das Antwortsignal empfängt oder das Ausbleiben eines Antwortsignals registriert, und
- die Sendeempfängereinrichtung (11) eine Messpositionsinformation bezüglich einer der Messposition entsprechenden Ortsposition der Sendeempfängereinrichtung (11) und/oder räumlichen Ausrichtung der Sendeempfängereinrichtung (11) ermittelt; und
Lokalisieren (S2) des Objekts (2) unter Berücksichtigung der empfangenen oder als ausbleibend registrierten Antwortsignale und der entsprechenden Messpositionsinformationen.

2. Verfahren nach Anspruch 1, wobei zum Lokalisieren des Objekts (2) für jede Messposition ein Abstand des Objekts (2) von der Sendeempfängereinrichtung (11) anhand einer Signalstärke des empfangenen Antwortsignals bestimmt wird.

3. Verfahren nach einem der Ansprüche 1 oder 2, wobei die Sendeempfängereinrichtung (11) das Messsignal in einen kegelförmigen Raumbereich (R) aussendet und das Objekt (2) in dem kegelförmigen Raumbereich (R) lokalisiert wird, falls die Sendeempfängereinrichtung (11) ein Antwortsignal empfängt.

4. Verfahren nach einem der vorangehenden Ansprüche, wobei eine Sendeleistung des Messsignals variiert wird, wobei eine minimale Sendeleistung ermittelt wird, welche ausreicht, um ein Antwortsignal zu empfangen, und wobei zum Lokalisieren des Objekts (2) ein Abstand des Objekts (2) von der Sendeempfängereinrichtung (11) unter Berücksichtigung der ermittelten minimalen Sendeleistung berechnet wird.

5. Verfahren nach einem der vorangehenden Ansprüche, wobei das Lokalisieren des Objekts (2) durch Trilateration und/oder Triangulierung durchgeführt wird.

6. Vorrichtung (1) zur Lokalisierung eines Objekts (2), wobei das Objekt (2) einen passiven Transponder (21) aufweist, wobei die Vorrichtung (1) aufweist:
eine Sendeempfängereinrichtung (11), welche zu einer Vielzahl von Messpositionen bewegbar ist, dazu ausgebildet ist, an jeder Messposition ein Messsignal auszusenden, und dazu ausgebildet ist, ein von dem Objekt (2) ausgesendetes Antwortsignal zu empfangen, welches der Transponder (21) des Objekts (2) aussendet, falls dieser das Messsignal empfängt, oder das Ausbleiben eines Antwortsignals zu registrieren; und
eine Auswerteeinrichtung (12), welche dazu ausgebildet ist, eine Messpositionsinformation bezüglich einer der Messposition entsprechenden Ortsposition der Sendeempfängereinrichtung (11) und/oder räumlichen Ausrichtung der Sendeempfängereinrichtung (11) zu ermitteln, und das Objekt (2) unter Berücksichtigung der empfangenen oder als ausbleibend registrierten Antwortsignale und der entsprechenden Messpositionsinformationen zu lokalisieren.

7. Vorrichtung (1) nach Anspruch 6, wobei die Auswerteeinrichtung (12) dazu ausgebildet ist, für jede Messposition einen Abstand des Objekts (2) von der Sendeempfängereinrichtung (11) anhand einer Signalstärke des empfangenen Antwortsignals zu bestimmen.

8. Vorrichtung (1) nach einem der Ansprüche 6 oder 7, wobei die Sendeempfängereinrichtung (11) dazu ausgebildet ist, das Messsignal in einen kegelförmigen Raumbereich (R) auszusenden und die Auswerteeinrichtung (12) dazu ausgebildet ist, das Objekt (2) in dem kegelförmigen Raumbereich (R) zu lokalisieren, falls die Sendeempfängereinrichtung (11) ein Antwortsignal empfängt.

9. Vorrichtung (1) nach einem der Ansprüche 6 bis 8, wobei die Sendeempfängereinrichtung (11) dazu ausgebildet ist, eine Sendeleistung des Messsignals zu variieren, und wobei die Auswerteeinrichtung (12) dazu ausgebildet ist, eine minimale Sendeleistung zu ermitteln, welche ausreicht, um ein Antwortsignal zu empfangen, und wobei die Auswerteeinrichtung (12) dazu ausgebildet ist, zum Lokalisieren des Objekts (2) einen Abstand des Objekts (2) von der Sendeempfängereinrichtung (11) unter Berücksichtigung der ermittelten minimalen Sendeleistung zu berechnen.

10. Vorrichtung (1) nach einem der Ansprüche 6 bis 9, wobei die Auswerteeinrichtung (12) dazu ausgebildet ist, das Lokalisieren des Objekts (2) durch Trilateration und/oder Triangulierung durchzuführen.
